# EUROPÄISCHE PATENTANMELDUNG

(11) **EP 3 399 774 A1**
(43) Veröffentlichungstag der Anmeldung: **07.11.2018**
(21) Anmeldenummer: 18160672.4
(22) Anmeldetag: 08.03.2018
(51) Int. Cl.: H04R 25/00, G01C 21/36, H04S 7/00

(54) **HÖRSYSTEM SOWIE HÖRVORRICHTUNG**

(30) Priorität: 05.05.2017 DE 102017207581
(71) Anmelder: Sivantos Pte. Ltd., Singapore 539775 (SG)
(72) Erfinder: KUKLA, Christoph, 91301 Forchheim (DE)
(74) Vertreter: FDST Patentanwälte

(57) **Zusammenfassung**

Es wird ein Hörsystem (2) angegeben, welches eine binaurale Hörvorrichtung (4) zur Versorgung eines Nutzers (8) des Hörsystems (2) mit einem räumlich positionierten akustischen Signal (S) aufweist. Weiterhin weist das Hörsystem (2) eine Signalverarbeitungseinheit (6) zur Erzeugung des akustischen Signals (S) sowie einen Positionssensor (12) zur Bestimmung einer aktuellen Position des Nutzers (8) auf. Das akustische Signal (S) ist derart beschaffen, dass es für den Nutzer (8) eine räumlich positionierte virtuelle Signalquelle (9) nachbildet, derart, dass eine Position der virtuellen Signalquelle (9) einer Position eines Zielortes des Nutzers (8) entspricht.

## Beschreibung

Die Erfindung betrifft ein Hörsystem mit den Merkmalen des Oberbegriffs des Anspruchs 1 sowie eine Hörvorrichtung mit den Merkmalen des Oberbegriffs des Anspruchs 14.

Ein derartiges Hörsystem ist aus der DE 10 2004 035 046 A1 zu entnehmen.

Das Hörsystem weist eine binaurale Hörvorrichtung, insbesondere ein binaurales Hörhilfegerät auf.

Hörsysteme sind in der heutigen Zeit weit verbreitet. Dabei wird unter Hörsystem häufig eine Hörvorrichtung, beispielsweise ein Headset, verstanden, welche mit einer Signalverarbeitungseinheit, beispielsweise einem Smartphone, verbunden ist. Hierbei erzeugt die Signalverarbeitungseinheit akustische Signale, beispielsweise die Sprache eines Telefongesprächspartners, welche mit Hilfe der Hörvorrichtung einem Nutzer des Hörsystems zugänglich gemacht werden. Allgemein bezeichnet ein Hörsystem somit beispielsweise eine Zusammenschaltung einer signalerzeugenden Einheit und einer signalwiedergebenden Einheit.

Häufig weisen Hörsysteme binaurale Hörvorrichtungen auf. Unter binauralen Hörvorrichtungen werden beidohrige Hörvorrichtungen, beispielsweise ein Kopfhörer, verstanden, welche ein Signal sowohl an das rechte, als auch an das linke Ohr des Nutzers senden. Binaurale Hörvorrichtungen werden typischerweise auch bei hörgeschädigten oder hörbeeinträchtigten Personen eingesetzt, um ein Hördefizit auszugleichen. Hierzu weisen die binauralen Hörvorrichtungen üblicherweise zumindest ein Mikrofon auf, welches akustische Signale, beispielsweise die Stimme eines Gesprächspartners empfängt. Die empfangenen Signale werden anschließend von einer Verstärkereinheit innerhalb der Hörvorrichtung verstärkt und über zumindest einen Lautsprecher, auch Hörer genannt, an den Nutzer ausgegeben.

Der Vorteil der binauralen Hörvorrichtung ist eine Möglichkeit einer Erzeugung eines räumlichen Signals. Mit anderen Worten: Der Mensch nimmt ein akustisches Signal, welches aus einer definierten Richtung ausgesendet wird mit seinen Ohren unterschiedlich wahr. Beispielsweise erreichen Schallwellen, welche aus einem in Blickrichtung des Menschen betrachteten linken Bereich ausgesendet werden, das linke Ohr des Menschen schneller, als das rechte Ohr. Diese Phasen- und Zeitverschiebung des akustischen Signals, insbesondere eine Auswertung dieser im menschlichen Gehirn, ermöglichen dem Menschen eine Lokalisierung des akustischen Signals. Der Mensch "hört" somit, dass das akustische Signal aus dem linken Bereich ausgesendet wird.

Mit Hilfe von Messungen können diese Phasen- und Zeitverschiebungen ermittelt und in einer mathematischen Funktion, beispielsweise der sogenannten Head Related Transfer Function (HRTF) beschrieben werden. Die HRTF weist alle physikalischen Kenngrößen auf, um das akustische Signal, welches sie beschreibt, lokalisieren zu können. Zur künstlichen Erzeugung eines räumlichen akustischen Signals werden die Phasen- und Zeitverschiebung mittels der Hörvorrichtung an das jeweilige Ohr des Nutzers gesendet, welche hierdurch das Signal derart wahrnimmt, als ob es von einer Position in seinem Umfeld ausgesendet wird.

Das aus der DE 10 2004 035 046 A1 bekannte Hörhilfesystem übermittelt dem Nutzer akustische Signale zur Information über Einstellungen und / oder Systemzustände des Hörhilfesystems.

Hierzu weist das Hörhilfesystem zwei am Kopf tragbare Hörhilfegeräte auf, mit deren Hilfe akustische Signale an das linke Ohr und das rechte Ohr übermittelt werden. Das Hörsystem ist derart ausgebildet, dass es ein Signal phasen- und oder zeitverschoben an das linke oder das rechte Ohr übermittelt, wodurch der Nutzer das Signal derart wahrnimmt, als würde es von einer räumlich in seinem Umfeld positionierten virtuellen Signalquelle erzeugt werden.

Den virtuellen Signalquellen wird ein Informationsgehalt zugeordnet. Beispielsweise ermöglicht die Erzeugung von virtuellen Signalquellen eine akustische Anzeige eines Batterieladezustands des Hörhilfesystems. Hierbei ist mittels einer virtuellen Signalquelle ein akustisches Signal derart räumlich positioniert, dass seine räumliche Höhe der Höhe des Batterieladezustands entspricht. Zur Interpretation der Höhe des akustischen Signals und somit des akustisch angezeigten Batterieladezustands wird eine akustische Skala übermittelt, beispielsweise in Form eines Wertebereiches von "links unten nach rechts oben".

In der US 2014/0016788 A1 ist ein binaurales Hörhilfesystem mit einem Hörhilfegerät angegeben, welches zur Auswahl von Betriebsmodi virtuelle räumlich positionierte Signalquellen erzeugt, sodass ein Nutzer mit Hilfe von Kopfbewegungen ein Betriebsmodus auswählen kann.

Hierbei erzeugt das Hörhilfegerät mittels der HRTF zumindest zwei unterschiedlich räumlich positionierte virtuelle Signalquellen. Eine Sensoreinheit ermittelt anschließend die Kopfbewegungen und eine Kopfausrichtung des Nutzers. Weist die Kopfausrichtung eine Ausrichtung in Richtung einer virtuellen Signalquelle auf, so erfolgt eine Auswahl dieser virtuellen Signalquelle mittels einer Bestätigungsaktion, beispielsweise durch ein Nicken des Nutzers mit dem Kopf.

Ausgehend hiervon liegt der Erfindung die Aufgabe zugrunde, ein Hörsystem mit erhöhtem Nutzwert für den Nutzer anzugeben.

Die Aufgabe wird erfindungsgemäß gelöst durch ein Hörsystem mit den Merkmalen des Anspruchs 1. Vorteilhafte Ausgestaltungen, Weiterbildungen und Varianten sind Gegenstand der Unteransprüche.

Das Hörsystem weist eine binaurale Hörvorrichtung mit einer Signalverarbeitungseinheit zur Erzeugung eines akustischen Ausgangssignals auf. Unter Hörvorrichtung wird im Allgemeinen eine Vorrichtung, insbesondere ein Gerät, zur Ausgabe von Schall, beispielsweise Musik und / oder eine Stimme mittels zumindest eines Lautsprechers verstanden. Hörvorrichtungen sind beispielsweise Kopfhörer, Headsets oder im Speziellen Hörhilfegeräte, beispielsweise implantierte "in-ear-Hörgeräte" und insbesondere Hörhilfegeräte der eingangs genannten Art.

Die binaurale Hörvorrichtung weist zumindest zwei Lautsprecher auf, wobei jeweils ein Lautsprecher einem Ohr zugeordnet ist. Weiterhin weist die binaurale Hörvorrichtung zumindest ein Mikrofon, bevorzugt zumindest ein Mikrofon pro Ohr zur Aufnahme von Umgebungsgeräuschen auf.

Mit Hilfe der binauralen Hörvorrichtung ist ein räumliches Hören ermöglicht. Unter räumlichem Hören wird verstanden, dass ein akustisches Signal, welches von einem Ohr einer Person erfasst wird, phasenverschoben und / oder zeitverzögert an dem anderen Ohr der Person anliegt. Die Phasen- und / oder Zeitverschiebung des Signals wird von der Person als eine räumliche Positionierung des Signals interpretiert. Somit ist es einem Menschen ermöglicht akustische Signale räumlich zuzuordnen.

Mittels der eingangs beschriebenen Head Related Transfer Function (HRTF) ist die Phasen- und / oder Zeitverschiebung in ein Gerät, beispielsweise eine binaurale Hörvorrichtung implementierbar. Somit ist es ermöglicht, ein akustisches Signal mittels der Hörvorrichtung zu erzeugen, dessen Signalquelle für den Nutzer der Hörvorrichtung räumlich in einem Umfeld um ihn herum zu liegen scheint. Tatsächlich wird das Signal jedoch direkt in, an oder vor dem Ohr des Nutzers erzeugt und lediglich die Phasen- und / oder Zeitverschiebung nachgebildet.

Bei der Erzeugung des Ausgangssignals wird dies ausgenutzt, sodass das erzeugte Ausgangsignal derart beschaffen ist, dass es für einen Nutzer eine räumlich positionierte virtuelle Signalquelle nachbildet. Mit anderen Worten: Für den Nutzer entsteht der Eindruck, dass das akustische Ausgangssignal anstatt von der Signalverarbeitungseinheit von einer räumlich positionierten Signalquelle ausgesendet wird. Da diese räumlich positionierte Signalquelle allerdings nicht real existiert und lediglich von der Signalverarbeitungseinheit nachgebildet wird, wird sie als virtuelle Signalquelle bezeichnet.

Allgemein ist es dem Menschen ermöglicht, aufgrund seines "akustischen Erfahrungsschatzes" zu erkennen, ob ein akustisches Signal beispielsweise entweder von "seitlich vorne" oder von "seitlich hinten" ausgesendet wird. Ein gesundes Gehör nutzt dazu den sogenannten Pinna-Effekt. Unter dem Pinna-Effekt ist eine Veränderung eines ursprünglich ausgesendeten Schalls durch die Pinna (Ohrmuschel) zusammen mit visuellen Eindrücken und Erfahrungen des Menschen zu verstehen.

Weiterhin weist das Hörsystem einen Positionssensor, beispielsweise einen GPS-Sensor auf. Mit Hilfe des Positionssensors erfolgt eine Bestimmung einer aktuellen Position des Nutzers. Alternativ oder ergänzend werden beispielsweise mittels eines mit dem Hörsystem verbundenen Smartphones Positionsinformationen an das Hörsystem übertragen. Beispielsweise weisen gegenwärtige Bluetooth-Protokolle derartige Positionsinformationen auf.

Weiterhin weist das Hörsystem ein Modul zur Identifizierung einer Position eines Ortes in der Umgebung des Nutzers auf. Unter Identifizierung eins Ortes wird vorliegend im Speziellen eine Informierung des Nutzers über sein Umfeld verstanden, beispielsweise im Hinblick auf Gebäude oder die Geografie der Umgebung des Nutzers. Zudem werden unter Ort vorliegend ergänzend zu der bekannten Definition beispielsweise auch Gebäude und / oder geografische Eigenschaften der Umgebung des Nutzers verstanden, beispielsweise ein Fluss in der Umgebung des Nutzers.

Die Signalverarbeitungseinheit ist zudem derart ausgebildet, dass die räumliche Position der virtuellen Signalquelle der Position des Ortes und / oder eines Point of Interest entspricht. Unter Point of Interest (POI) wird allgemein entsprechend der Übersetzung ein Ort von Interesse für den Nutzer verstanden. Beispielsweise sind in einem für den Nutzer fremden Land und / oder Stadt Restaurants, Hotels sowie Sehenswürdigkeiten POI für den Nutzer.

Mit anderen Worten: Es erfolgt ein Abgleich der aktuellen Position des Nutzers mit einer Position des Ortes. Anschließend erzeugt die Signalverarbeitungseinheit ein phasenverschobenes und / oder zeitverzögertes akustisches Ausgangssignal, welches sie mittels der binauralen Hörvorrichtung an den Nutzer weiterleitet. Die Phasenverschiebung und / oder die Zeitverzögerung des erzeugten akustischen Ausgangssignals ist dabei derart gewählt, dass das akustische Ausgangssignal für den Nutzer von einer räumlich positionierten virtuellen Signalquelle ausgesendet wird, deren Position der Position des Ortes entspricht.

Gemäß einer zweckmäßigen Weiterbildung handelt es sich bei dem Modul um eine Eingabeeinheit zur Vorgabe einer Position des Ortes, insbesondere eines POI. Hierdurch ist es ermöglicht, nutzerspezifisch Orte, insbesondere POI vorzugeben. Beispielsweise ist es dem Nutzer mittels des Hörsystems ermöglicht, Restaurants und / oder bestimmte Geschäfte mittels der Eingabeeinheit vorzugeben, welche ihm dann anschließend mittels der Hörvorrichtung "akustisch angezeigt" werden.

Bevorzugt werden mehrere akustische Ausgangssignale mittels der Signalverarbeitungseinheit erzeugt, welche jeweils eine virtuelle Signalquelle nachbilden. Hierdurch erhält der Nutzer eine "Signalkarte" nach Art einer Land- oder Straßenkarte, die eine Orientierung und / oder eine erweiterte Information hinsichtlich der Orte ermöglicht. Beispielsweise kann der Nutzer somit abhängig von seiner aktuellen Position Orte "hören", die er nicht sieht und sich somit orientieren. Eine Information erfolgt rein akustisch, beispielsweise mittels eines Tons, welcher aus der Richtung zu kommen scheint, in der der Nutzer über die Eingabeeinheit einen Ort vorgegeben hat.

Zweckdienlicherweise ist das Modul zur Identifizierung der Position des Ortes mit Hilfe einer Umgebungskarte ausgebildet. Hierzu ist das Hörsystem beispielsweise mit einem online-Kartendienst verbunden oder das Hörsystem weist eine intern gespeicherte Karte der Umgebung des Nutzers auf.

Gemäß einer besonders bevorzugten Ausgestaltung erfolgt eine Identifizierung der Position des Ortes durch das Modul mittels des zumindest einen Mikrofons der Hörvorrichtung. Hierzu werden mit Hilfe des zumindest einen Mikrofons Umgebungsgeräusche, beispielsweise das Plätschern eines Flusses aufgenommen und dem Nutzer akustisch aufbereitet übermittelt. Die Aufnahme erfolgt beispielsweise als eine binaurale, ortsaufgelöste Tonaufnahme im Rahmen des normalen Betriebes des Hörsystems. Unter akustisch aufbereitet wird vorliegend verstanden, dass, beispielsweise das Plätschern des Flusses verstärkt wird und / oder als akustisches Ausgangssignal zur Nachbildung einer an der Position des Flusses positionierten Signalquelle genutzt wird. Der Nutzer erfährt somit eine Information, dass sich in seinem Umfeld ein Fluss befindet, an dessen Position eine virtuelle Signalquelle angeordnet ist. Weiterhin ist hierdurch beispielsweise auch ein "akustisches Erkennen" von Gegenständen oder öffentlichen Plätzen sowie Personenansammlungen ermöglicht. Beispielsweise ermöglicht eine akustische Aufnahme von spielenden Kindern eine Lokalisierung eines Kinderspielplatzes, welcher anschließend durch die Signalverarbeitungseinheit mittels einer virtuell platzierten Signalquelle dem Nutzer akustisch dargestellt wird.

Um den Nutzer an die unterschiedliche Ausgestaltung hinsichtlich der unterschiedlichen akustischen Ausgangssignale und der dadurch positionierten virtuellen Signalquellen zu gewöhnen, erfolgt vorzugsweise ein Training, beispielsweise im Rahmen einer Fitting-Session bei einem Akustiker. Alternativ erfolgt das Training während des Betriebs des Hörsystems durch den Nutzer. Hierzu ist das Hörsystem beispielsweise mit einer Virtual-Reality-Brille verbunden, welche während des Trainings dem Nutzer eine Umgebung einspielt, in der durch das Hörsystem virtuelle Signalquellen positioniert sind.

Der Vorteil ist darin zu sehen, dass es dem Nutzer auf eine einfache Art und Weise ermöglicht ist anhand der unterschiedlichen akustischen Ausgangssignale eine Differenzierung hinsichtlich der Art der Gebäude durchzuführen.

Bevorzugt ist die Signalverarbeitungseinheit zur Ausgabe von unterschiedlichen akustischen Ausgangssignalen ausgebildet. Die Ausgangssignale sind hierbei in Abhängigkeit von Eigenschaften des Ortes verschieden. Unter Eigenschaften des Ortes wird vorliegend beispielsweise eine Unterscheidung von Gegenständen an dem Ort, insbesondere eine Art des Gegenstandes, beispielsweise eine Unterscheidung zwischen einem Gebäude und einem Auto sowie beispielsweise eine Zweckbestimmung eines Gegenstandes an dem Ort, beispielsweise eine Unterscheidung hinsichtlich eines Geschäftes oder eines Krankenhauses verstanden. Mit anderen Worten: Die Signalverarbeitungseinheit weist für unterschiedliche Gegenstände innerhalb der Umgebung des Nutzers unterschiedliche akustische Ausgangssignale auf, die die virtuell positionierten Signalquellen nachbilden. Unter Gegenständen werden hierbei beispielsweise Gebäude, Autos und / oder geografische Eigenschaften der Umgebung des Nutzers, beispielsweise ein Fluss verstanden. Dabei weisen gleiche Gegenstände, welche sich an unterschiedlichen Orten befinden jedoch immer das gleiche akustische Ausgangssignal auf. D.h. der Nutzer hört bei virtuell positionierten Signalquellen, welche beispielsweise Restaurants nachbilden, immer das gleiche Ausgangssignal, was dem Nutzer die Möglichkeit bietet, sich alle in seiner Umgebung befindliche Restaurants akustisch darstellen zu lassen.

Gemäß einer zweckdienlichen Weiterbildung ist die Signalverarbeitungseinheit derart ausgebildet, dass sie insbesondere eine zeitabhängige Auswahl der Orte zu denen eine durch ein akustisches Ausgangssignal nachgebildete virtuell positionierte Signalquelle ausgegeben wird ermöglicht. Die Auswahl, insbesondere die zeitabhängige Auswahl ist vorzugsweise durch den Nutzer konfigurierbar und erfordert beispielsweise zumindest eine Verbindung des Hörsystems mit einem Zeitgeber, beispielsweise der Uhrfunktion innerhalb eines mit dem Hörsystem verbundenen Smartphones. Unter zeitabhängige Auswahl wird vorliegend eine derartige Selektierung der akustisch ausgegebenen Ausgangssignale verstanden, dass dem Nutzer beispielsweise morgens beim Weg zur Arbeit beispielsweise bevorzugt Parkplätze akustisch dargestellt werden, während hingegen an einem Nachmittag beispielsweise bevorzugt Geschäfte akustisch dargestellt werden.

Weiterhin ist zudem eine störungsfreie Information des Nutzers gewährleistet. Unter störungsfrei wird hierbei verstanden, dass der Nutzer aufgrund der einfachen Gestaltung der Information, respektive der Informierung, keine "Überladung" mit Information erhält und sich beispielsweise einem Gespräch widmen kann, ohne sich noch zusätzlich auf die akustischen Ausgangssignale konzentrieren zu müssen.

Gemäß einer zweckmäßigen Ausgestaltung ist die Signalverarbeitungseinheit derart ausgebildet, dass die virtuelle Signalquelle durch ein sprachloses akustisches Ausgangssignal, insbesondere durch einen Signalton und / oder eine Signaltonfolge nachgebildet ist. Unter sprachlosem akustischem Ausgangssignal wird verstanden, dass vorzugsweise keine Sätze, speziell keine Wortfolgen und insbesondere auch keine einzelnen Worte ausgegeben werden. Hierdurch ist der Erhalt der Information weiter vereinfacht. Aufgrund der räumlichen Positionierung ist insbesondere der Signalton als Nachbildung der virtuellen Signalquelle ausreichend, um den Nutzer über den Ort zu informieren. Das ist insbesondere ein Vorteil hinsichtlich einer Nutzung des Hörsystems durch ältere und / oder hörempfindliche und / oder hörgeschädigte Personen. Die räumliche Positionierung der virtuellen Signalquelle und somit die räumliche "Positionierung" des Signaltons ist hinsichtlich des Informationsgehaltes ausreichend. Gleichzeitig ist es so ausgebildet, dass einer "Informationsüberladung" vorgebeugt ist.

Bevorzugt ist die Signalverarbeitungseinheit derart ausgebildet, dass die Position der virtuellen Signalquelle ortsfest und unabhängig von der aktuellen Position des Nutzers ist. Hierdurch ist auch bei einer Bewegung des Nutzers eine Erweiterung eines Informationsumfeldes des Nutzers mittels einer "akustischer Darstellung" sowie eine einfachere räumliche Orientierung ermöglicht. Unter Informationsumfeld wird hierbei eine Menge an visuellen und insbesondere akustischen Informationen innerhalb eines natürlichen Hör- und Sehumfeldes einer Person verstanden. Unter "akustischer Darstellung" wird hierbei verstanden, dass der Nutzer durch die erzeugten virtuellen Signalquellen die "Signalkarte" erzeugt, auf der die Zielorte, analog zu einer grafischen Darstellung von Zielorten auf einer Land- oder Straßenkarte, akustisch dargestellt sind.

In einer bevorzugten Weiterbildung ist das Hörsystem zur Navigation des Nutzers zu einem Zielort ausgebildet. Die Navigation erfolgt hierbei derart, dass mittels des Positionssensors, beispielsweise mittels GPS, die aktuelle Position des Nutzers bestimmt wird. Anschließend erfolgt ein Abgleich der aktuellen Position des Nutzer mit der Position des gewünschten Zielorts. Zum Navigieren des Nutzers zum Zielort erzeugt die Signalverarbeitungseinheit bevorzugt mehrere durch akustische Ausgangssignale nachgebildete virtuelle Signalquellen. Dabei sind die virtuellen Signalquellen derart räumlich positioniert, dass sie dem Weg zum Zielort entsprechen und somit den Nutzer sprachlos führen. Dem Nutzer werden sequentiell aufeinander folgende virtuelle Signalquellen "dargeboten", die entlang eines vorgeschlagenen Weges vom aktuellen Standort zum Zielort verteilt sind. D.h. Der Nutzer hört beispielsweise ein akustisches Ausgangssignal einer Signalquelle vor sich, welches ihn beispielsweise einer Straße folgen lässt. Sofern der Nutzer an einer Straßenkreuzung oder -einmündung abbiegen soll, um an seinen Zielort zu kommen, wird eine neue, mittels eines akustischen Ausgangssignals nachgebildete virtuelle Signalquelle in der Straße "positioniert" in die der Nutzer einbiegen soll. Der Nutzer hört somit beispielsweise an der Straßenkreuzung oder -einmündung rechts von sich eine neue durch ein akustisches Ausgangssignal nachgebildete virtuelle Signalquelle und biegt ab. Der Nutzer folgt somit der virtuell positionierten Signalquelle.

Beispielsweise nimmt der Nutzer anstelle eines Sprachkommandos "in die nächste Straße rechts abbiegen" eine virtuelle Signalquelle wahr, die in der nächsten rechten Straßeneinmündung positioniert ist und den Nutzer somit zum Rechtsabbiegen leitet.

Der Nutzer wird somit sukzessiv durch eine Aneinanderreihung von virtuellen Signalquellen und ohne Sprachkommandos zu seinem Ziel gelotst.

Der Vorteil dieser Weiterbildung ist eine vereinfachte Erweiterung des Informationsumfeldes des Nutzers ohne ihn mit Information zu überladen.

Zweckdienlicherweise ist die Signalverarbeitungseinheit derart ausgebildet, dass ein Parameter, beispielsweise die Lautstärke des akustischen Ausgangssignals und / oder die Geschwindigkeit, mit der die Signaltonfolge des akustischen Ausgangssignals abgespielt wird, abhängig von der aktuellen Position des Nutzers in Relation zum Ort variiert. Hierdurch erfolgt beispielsweise eine genaue Zielführung bei der Navigation des Nutzers zum Zielort. Beispielsweise wird das akustische Ausgangssignal lauter, wenn sich der Nutzer auf die virtuelle Signalquelle und somit auf den Zielort zubewegt.

Mit Hilfe der Eingabeeinheit oder beispielsweise einem Smartphone des Nutzers ist eine Auswahl des Zielortes ermöglicht. Die Auswahl erfolgt beispielsweise sprachgesteuert und / oder gestengesteuert und / oder berührungsgesteuert, vorzugsweise mittels eines Touchscreens oder einer Tastatur. Bei der Vorgabe des Zielorts mittels des Smartphones des Nutzers ist dieses beispielsweise mit der Signalverarbeitungseinheit vorzugsweise drahtlos verbunden, beispielsweise mittels Bluetooth.

Die Ausgestaltung hat den Vorteil, dass eine einfache Auswählbarkeit des Zielortes ermöglicht ist. Gleichzeitig ist aufgrund der Möglichkeit zur Einrichtung einer drahtlosen Verbindung eine Modularität und Vielseitigkeit hinsichtlich einer Wahl der Eingabeeinheit realisiert.

Gemäß einer bevorzugten Ausgestaltung weist das Hörsystem eine Erfassungseinheit auf, welche zur Erfassung der Orientierung des Kopfes des Nutzers ausgebildet ist. Die Erfassung der Orientierung des Kopfes ist bekannt. Zur Erfassung der Orientierung des Kopfes wird insbesondere ein Verfahren verwendet, wie es in der DE 10 2004 035 046 A1 beschrieben ist.

Gemäß einer bevorzugten Weiterbildung ist die Erfassungseinheit zur Erfassung einer Bewegung, beispielweise einer Drehung des Kopfes ausgebildet. Weiterhin ist die Signalquelle derart ausgebildet, dass die Position der virtuellen Signalquelle in Bezug auf die Orientierung des Kopfes derart angeglichen wird, sodass für den Nutzer die virtuelle Signalquelle und somit der Zielort ortsfest ist.

Zur Erfassung der Bewegung sind beispielsweise Beschleunigungssensoren und / oder Sensoren, die nach dem gyroskopischen Prinzip arbeiten innerhalb der Hörvorrichtung angeordnet. Zur Angleichung der Position der virtuellen Signalquelle ist "um" den Kopf des Nutzers ein Bezugssystem angeordnet. Unter Bezugssystem wird vorliegend ein System nach Art eines dreidimensionalen kartesischen Koordinatensystems verstanden, dessen Achsen jeweils orthogonal zueinander angeordnet sind, wobei eine Achse als eine Verbindungsachse zwischen den beiden Ohren des Nutzers definiert ist, sodass die Verbindungsachse die beiden Ohren des Nutzers als "Punkte" der Achse aufweist. Der Kopf des Nutzers ist im Ursprung des Bezugssystems angeordnet. Innerhalb des Bezugssystems ist eine Bewegung, insbesondere eine Drehung des Kopfes als ein Winkel beschreibbar. Dreht der Nutzer beispielsweise den Kopf aus einer maximalen rechten Stellung - der Nutzer blickt über seine rechte Schulter - in eine maximale linke Auslenkung - der Nutzer blickt anschließend über seine linke Schulter - so dreht der Nutzer seinen Kopf innerhalb des Bezugsystems in einen Winkel von 180° nach links um eine senkrecht zur Verbindungsachse angeordnete und sich entlang der Wirbelsäule des Nutzer erstreckende Lotachse.

Um die Position der ortsfesten virtuellen Signalquelle im Bezugssystem des Kopfes des Nutzers anzugleichen, "verschiebt" die Signalverarbeitungseinheit die Position der virtuellen Signalquelle in einem Winkel welcher den gleichen Wert aufweist wie der Wert des Winkels, um den der Kopf des Nutzers gedreht wird. Allerdings erfolgt die "Verschiebung" der Position der virtuellen Signalquelle in eine zur Drehrichtung des Kopfes des Nutzers entgegengesetzte Richtung. Gemäß dem oben beschriebenen Beispiels "verschiebt" die Signalverarbeitungseinheit die Position der virtuellen Signalquelle in einem Winkel von 180° nach rechts. Dabei dient als Drehachse ebenfalls die Lotachse.

Mit anderen Worten: die Position der virtuellen Signalquelle "verschiebt" sich bei einer Bewegung und / oder Drehung des Kopfes des Nutzers mit einem Wert um genau den gleichen Wert in die entgegengesetzte Richtung und / oder Drehrichtung. Vereinfacht ausgedrückt: Dreht der Nutzer seinen Kopf nach rechts, so "dreht" sich die Position der virtuellen Signalquelle nach links und umgekehrt. Analog hierzu verschiebt sich die Position der virtuellen Signalquelle bei einer Kippbewegung und / oder einer Kombination aus einer Drehbewegung und einer Kippbewegung des Kopfes des Nutzers.

Hierdurch ist eine ortsfeste Position der virtuellen Signalquelle unabhängig einer Kopfbewegung oder einer Orientierung des Kopfes des Nutzers ermöglicht. Zudem ist eine Orientierung und / oder Navigation des Nutzers im Informationsumfeld vereinfacht.

Zweckdienlicherweise weist das Hörsystem eine Verbindung mit einer Datenbank, beispielsweise dem Internet auf. Die Datenbank weist bevorzugt Informationen über die Positionen von Orten auf. Alternativ ist die Datenbank, insbesondere die darauf gespeicherten Informationen intern im Hörsystem integriert, beispielsweise auf einem mit dem Hörsystem verbundenen Smartphone hinterlegt, beispielsweise als App. Analog dazu weist das Hörsystem eine externe Datenbank, beispielsweise eine Festplatte auf. Weiterhin ist eine Ausgestaltung von mehreren Nutzerprofilen mittels der Datenbank ermöglicht, welche nutzerspezifische (Ziel-)Orte und / oder nutzerspezifische Informationen über (Ziel)-Orte aufweisen.

Gemäß einer bevorzugten Weiterbildung ist die Datenbank derart ausgebildet, dass sie vom Nutzer verwaltbar ist. D.h. der Nutzer speist die Datenbank beispielsweise mit nutzerspezifischen Zielorten und / oder Informationen über Zielorte, welche im Betrieb von dem Hörsystem abrufbar sind. Hierdurch ist eine nutzerspezifische Anpassung der Zielorte und / oder Informationen über Zielorte ermöglicht. Unter Informationen über Zielorte werden vorliegend beispielsweise tageszeitabhängige Öffnungszeiten und / oder Informationen aus Social Networks verstanden.

Zweckdienlicherweise ist die Signalverarbeitungseinheit derart ausgebildet, dass sie die akustischen Ausgangssignale mit Umgebungssignalen überlagert. Unter Umgebungssignalen werden hierbei allgemein Geräusche, beispielsweise Motorengeräusche, Töne, Musik und andere im Alltag auftretende Geräusche sowie auch Sprache verstanden. Die Signalverarbeitungseinheit unterdrückt die Umgebungssignale nicht vollständig, sodass der Nutzer durch eine Einbindung der Signalquellen in die Umgebungssignale eine akustische Erweiterung seiner Umgebung wahrnimmt.

Durch die Überlagerung des akustischen Ausgangssignals mit den Umgebungssignalen entsteht für den Nutzer eine natürliche Wahrnehmung der Signalquellen. Mit anderen Worten: Durch die Überlagerung des akustischen Ausgangssignals mit den Umgebungssignalen sind die Signalquellen nutzerfreundlich in das Umfeld des Nutzers integriert.

Insbesondere werden die virtuellen Signalquellen der normalen Funktion des Hörhilfegerätes überlagert. D.h. das Hörhilfegerät weist beispielsweise drei Betriebsmodi auf, mittels denen die Überlagerung der virtuellen Signalquellen mit den Umgebungssignalen einstellbar ist. Mit anderen Worten: Beispielsweise weist das Hörhilfegerät einen Betriebsmodus auf, mittels dem ein normaler Betrieb (die Umgebungssignale werden zum Ausgleich des Hördefizits des Nutzers verstärkt wiedergegeben) des Hörhilfegerätes realisiert ist. In einem zweiten Betriebsmodus werden die virtuellen Signalquellen zusätzlich zu dem normalen Betrieb und der verstärkten Wiedergabe der Umgebungssignale von dem Hörhilfegerät ausgegeben. Die Verstärkung der Umgebungssignale ist in diesem Betriebsmodus jedoch reduziert. In einem dritten Betriebsmodus wird beispielsweise die Verstärkung der Umgebungssignale vollständig ausgeblendet und der Nutzer hört ausschließlich die virtuellen Signalquellen.

Gemäß einer bevorzugten Weiterbildung ist die binaurale Hörvorrichtung als ein Hörhilfegerät ausgebildet. Unter Hörhilfegerät wird ein Gerät zur Versorgung einer hörgeschädigten oder hörbeeinträchtigten Person verstanden, welche das Hörhilfegerät insbesondere durchgängig oder die meiste Zeit trägt, um ein Hördefizit auszugleichen.

Hierdurch wird dem Nutzer zum Ausgleich und / oder zur Verbesserung des Hördefizits mittels der räumlich positionierten Signalquellen eine verbesserte Informationsversorgung über sein Umfeld ermöglicht. Insbesondere aufgrund der Nachbildung der Signalquelle durch ein sprachloses Ausgangssignal ist hierbei für den hörgeschädigten und / oder hörbeeinträchtigten Nutzer ein Vorteil zu sehen. Mit anderen Worten: Hörgeschädigte und oder hörbeeinträchtigte Nutzer empfinden aufgrund ihres eingeschränkten Hörvermögens akustischen Informationen, beispielsweise Sprache und / oder Musik häufig als störend oder unnatürlich. Allgemein ist das eingeschränkte Gehör der Nutzer insbesondere an Orten, welche eine Fülle an akustischen Informationen für den Nutzer aufweisen, überfordert. Orte, welche eine Fülle an akustischen Informationen aufweisen sind beispielsweise eine Fußgängerzone einer Innenstadt oder eine Ansammlung von Menschen, beispielsweise bei einem Konzert. Mittels der räumlich positionierten Signalquellen erfährt der hörgeschädigte und / oder hörbeeinträchtigte Nutzer eine Information über sein Umfeld ohne, dass der Nutzer von der Information überladen und / oder sich gestört fühlt.

Alternativ oder ergänzend ist mittels der Eingabeeinheit vom Nutzer zumindest ein Ambientesignal auswählbar, welches über das akustische Ausgangssignal überlagerbar ist. Unter Ambientesignal wird hierbei ein akustisches Signal verstanden, welches den Nutzer in seinem aktuellen Gemütszustand unterstützen soll oder den Nutzer in einen bestimmten Gemütszustand versetzen soll. Insbesondere wird unter Ambientesignal Musik und / oder typische Hintergrundgeräusche, beispielsweise das Knistern eines Feuers verstanden. Bevorzugt weist die Eingabeeinheit mehrere auswählbare Programme auf, welche jeweils ein anderes Ambientesignal aufweisen. Beispielsweise ist bei einem "Guten-Morgen-Programm" das akustische Ausgangssignal mit Vogelgezwitscher überlagert; bei einem "Relax-Programm" ist das akustische Ausgangssignal beispielsweise mit Meeresrauschen überlagert.

Die Aufgabe wird weiterhin gelöst durch eine Hörvorrichtung mit den Merkmalen des Anspruchs 19.

Die Hörvorrichtung ist als eine binaurale Hörvorrichtung ausgebildet und weist eine Signalverarbeitungseinheit zur Erzeugung eines akustischen Ausgangssignals auf. Das Ausgangssignal ist derart beschaffen, dass es für einen Nutzer eine räumlich positionierte virtuelle Signalquelle nachbildet. Die Signalverarbeitungseinheit ist dabei derart ausgebildet, dass eine räumliche Position der virtuellen Signalquelle der Position eines vorgebbaren Zielorts entspricht.

Die im Hinblick auf das Hörsystem aufgeführten Vorteile und bevorzugten Ausgestaltungen sind sinngemäß auf die Hörvorrichtung zu übertragen und umgekehrt.

Ausführungsbeispiele der Erfindung werden nachfolgend anhand von Figuren näher erläutert. Diese zeigen teilweise in stark vereinfachten Darstellungen:
- Fig. 1: ein Blockschaltbild eines Hörsystems sowie
- Fig. 2: um einen Nutzer räumlich positionierte virtuelle Signalquellen.

In den Figuren sind gleichwirkende Teile mit den gleichen Bezugszeichen dargestellt.

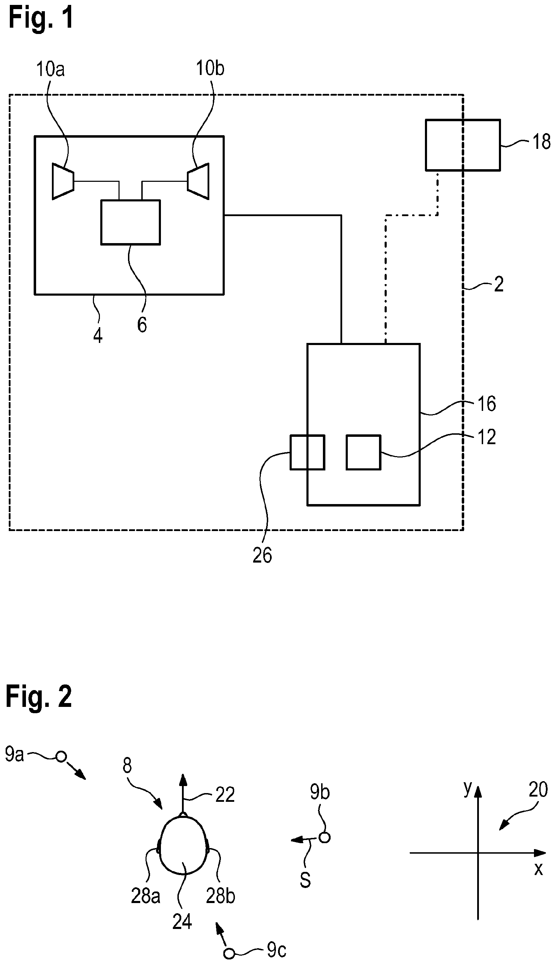

In Fig. 1 ist ein Blockschaltbild eines Hörsystems 2 dargestellt. Unter Hörsystem 2 ist hierbei entgegen dem allgemeinen Sprachgebrauch eine Anordnung von zumindest zwei Vorrichtungen und / oder Einheiten zu verstehen. Zudem sind die Vorrichtungen und / oder die Einheiten innerhalb des Hörsystems 2 zu einem Datenaustausch miteinander verbunden, vorzugsweise mittels einer drahtlosen Verbindung, beispielsweise mittels einer Bluetooth-Verbindung.

Das Hörsystem 2 weist eine binaurale Hörvorrichtung 4 mit einer Signalverarbeitungseinheit 6 auf. Unter binauraler Hörvorrichtung 4 ist allgemein eine Hörvorrichtung, beispielsweise ein Kopfhörer, zu verstehen, welche zu einer beidohrigen Versorgung eines Nutzers 8 (siehe FIG 2) mit einem akustischen Signal ausgebildet ist. Hierzu weist die binaurale Hörvorrichtung 4 zumindest zwei Lautsprecher 10a,b auf, nämlich jeweils zumindest einen für das linke Ohr und zumindest einen für das rechte Ohr des Nutzers 8. Im Speziellen wird unter einer binauralen Hörvorrichtung ein Hörhilfegerät verstanden, welches zur Unterstützung des Hörvermögens einer hörbeeinträchtigten und / oder hörgeschädigten Person ausgebildet ist.

Das akustische Signal wird mittels der Signalverarbeitungseinheit 6 der binauralen Hörvorrichtung 4 erzeugt und an die Lautsprecher 10a,b geleitet, vorzugsweise mittels einer herkömmlichen Leitung, alternativerweise mittels einer drahtlosen Verbindung, beispielsweise Bluetooth.

Alternativ oder ergänzend weist die binaurale Hörvorrichtung 4 zwei Signalverarbeitungseinheiten 6 auf, sodass je eine Signalverarbeitungseinheit 6 an einem Lautsprecher 10a,b angeordnet ist. Eine Kommunikation zwischen den beiden Signalverarbeitungseinheiten 6 erfolgt in der alternativen Ausgestaltung mittels einer drahtlosen Verbindung, beispielsweise mittels Bluetooth.

Mittels der Signalverarbeitungseinheit 6 sowie der binauralen Hörvorrichtung 4 ist eine Erzeugung eines räumlich positionierten akustischen Ausgangssignals S, im Folgenden als akustisches Signal S bezeichnet, ermöglicht. D.h., dass mittels der Signalverarbeitungseinheit 6 ein akustisches Signal S erzeugt wird, welches anschließend mittels der binauralen Hörvorrichtung 4 dem Nutzer 8 zugespielt wird, sodass bei dem Nutzer 8 ein Eindruck entsteht, dass das akustische Signal S eine räumlich in einem Umfeld des Nutzers 8 positionierte virtuelle Signalquelle 9 (siehe Fig. 2) nachbildet. Mit anderen Worten: Der Nutzer nimmt das akustische Signal S derart wahr, als käme es aus einer Richtung, beispielsweise links neben dem Nutzer 8; obwohl das akustische Signal S in, an oder unmittelbar vor den beiden Ohren des Nutzers 8 eingespielt wird.

Mit Hilfe der Signalverarbeitungseinheit 6 ist die Phasenverschiebung und / oder die Zeitverzögerung des akustischen Signals S nachbildbar, sodass mittels der binauralen Hörvorrichtung 4 das akustische Signal S derart an die beiden Ohren des Nutzers 8 übermittelt wird, dass bei dem Nutzer 8 der Eindruck entsteht, dass er ein räumlich positioniertes akustisches Signal S wahrnimmt. Hierbei wird mittels der Lautsprecher 10a,b beispielsweise dem rechten Ohr des Nutzers 8 das phasenverschobene und / oder zeitverzögerte akustische Signal S übermittelt und dem linken Ohr des Nutzers das akustische Signal S übermittelt. Das akustische Signal S ist im Ausführungsbeispiel insbesondere als ein sprachloses akustisches Signal S, beispielsweise als ein Signalton ausgebildet.

Die Erzeugung von räumlich positionierten akustischen Signalen S wird im Ausführungsbeispiel genutzt, um den Nutzer 8 über sein Umfeld zu informieren. Hierbei wird unter informieren verstanden, dass die Signalverarbeitungseinheit 6 mittels akustischer Signale S räumlich positionierte virtuelle Signalquellen 9 nachbildet, deren Position einer Position eines Zielortes, beispielsweise eines Point of Interest (POI) des Nutzers 8 entspricht.

Hinsichtlich der Positionierung der virtuellen Signalquellen 9 ist eine Bestimmung einer aktuellen Position des Nutzers als eine Referenzposition erforderlich. Hierfür weist das Hörsystem 2 einen Positionssensor 12, beispielsweise einen GPS-Sensor auf, welcher zur Bestimmung der aktuellen Position des Nutzers 8 ausgebildet ist. Unter Referenzposition ist vorliegend die aktuelle Position des Nutzers 8 zu verstehen, sodass die Signalerfassungseinheit 4 zum Einen "weiß" in welcher räumlichen Beziehung sie die virtuellen Signalquellen 9 positionieren muss und zum Anderen ob die aktuelle Position des Nutzers 8 und / oder sein näheres Umfeld POIs aufweisen, an denen jeweils eine virtuelle Signalquelle 9 positioniert werden kann. Unter näherem Umfeld wird beispielsweise ein Umkreis des Nutzers 8 mit einem Durchmesser mit einem Wert im Bereich von vorzugsweise zweistelligen Meterangaben verstanden.

Alternativ oder ergänzend ist eine Positionsbestimmung und / oder eine Optimierung der Positionsbestimmung mittels einer akustischen Information ermöglicht. Hierzu empfängt die Hörvorrichtung 2 Positionssignale, vorzugsweise von dem Positionssensor 12 und vergleicht diese mit aktuellen akustischen Informationen, welche mittels zumindest eines an der Hörvorrichtung 2 angeordneten Mikrofons empfangen werden. Unter akustischen Informationen werden hierbei akustische Signale verstanden, welche Informationen über eine Position enthalten. Beispielsweise liefert das Geräusch eines startenden Flugzeuges eine akustische Information darüber, dass sich der Nutzer an oder in einem Flughafen befindet. Das Hörsystem 2 weist weiterhin eine Eingabeeinheit 16, beispielsweise ein Smartphone auf, über die eine Auswahl des Zielortes durch den Nutzer 8 erfolgt. Die Eingabeeinheit 16 ist im Ausführungsbeispiel vorzugsweise mit Hilfe einer drahtlosen Verbindung, beispielsweise Bluetooth mit dem Hörsystem 2 verbunden. Alternativ ist die Eingabeeinheit 16 in das Hörsystem 2 integriert. Die Auswahl des Zielorts erfolgt beispielsweise mittels einer Sprach- und / oder Gestensteuerung. Alternativ wird der Zielort berührungsgesteuert beispielsweise mittels eines Touchscreens oder einer Tastatur ausgewählt.

Hinsichtlich einer Auswahlmöglichkeit verschiedener Zielorte weist das Hörsystem 2 zumindest eine Verbindung zu einer Datenbank 18, beispielsweise einem Nutzerprofil nach bekannter Art eines Accounts eines Internetportals auf. Die Datenbank 18 weist zum Einen verschiedene Zielorte auf und zum Anderen Informationen über die Zielorte auf und ist durch den Nutzer 8 verwaltbar, so dass nutzerspezifisch Zielorte der Datenbank 18 hinzufügen und / oder aus der Datenbank 18 löschen kann. Beispielsweise ermöglicht die Verwaltung der Datenbank 18 dem Nutzer 8 die Möglichkeit Informationen über gesuchte Artikel, beispielsweise ein T-Shirt, in der Datenbank 18 abzulegen. Sofern sich der Nutzer anschließend beispielsweise entlang einer Straße mit mehreren Bekleidungsgeschäften bewegt, ist das Hörsystem 2 dazu ausgebildet, dem Nutzer 8 eine virtuelle Signalquelle 9 an eine Position eines Geschäftes zu positionieren, welches das gesuchte T-Shirt im Sortiment führt. Der Nutzer 8 wird somit einfach rein akustisch informiert und muss sich nicht einer Fülle an Informationen der Geschäfte aussetzen, um sein gesuchtes T-Shirt zu finden. Diese Ausgestaltung des Hörsystems 2 erfordert zu einem Datenabgleich jedoch beispielsweise eine Verbindung zum Internet, welche allerdings mittels des mit dem Hörsystem 2 verbundenen Smartphone realisiert wird. Weiterhin ist das Hörsystem 2 im Ausführungsbeispiel derart ausgebildet, dass mittels der Verbindung zur Datenbank 18 und / oder einer Verbindung beispielsweise zum Internet eine tageszeitabhängige und / oder ortsabhängige Information des Nutzer ermöglicht ist. D.h., dass dem Nutzer beispielsweise auf seinem Arbeitsweg beispielsweise bevorzugt Parkplätze mittels der virtuell positionierten Signalquellen akustisch "angezeigt" werden, während beispielsweise bei einem Schlendern durch eine Einkaufsstraße dem Nutzer bevorzugt Geschäfte in bereits zuvor beschriebener Weise mittels der virtuell positionierten Signalquellen akustisch "angezeigt" werden.

Alternativ oder ergänzend weist die Eingabeeinheit 16, im Ausführungsbeispiel das Smartphone des Nutzers 8, die Datenbank 18 auf. Die Datenbank 18 ist hierbei durch einen internen Speicher der Eingabeeinheit 16 realisiert. Hierdurch ist eine "All-in-One"-Ausgestaltung von Eingabeeinheit 16 und Datenbank 18 erreicht, was die Bedienbarkeit für den Nutzer 8 verbessert. Weiterhin kann auch ein innerhalb der Eingabeeinheit 16, beispielsweise innerhalb des Smartphones integrierter GPS-Sensor als Positionssensor 12 genutzt werden.

Somit wählt der Nutzer 8 beispielsweise mittels einer App innerhalb seines Smartphones abhängig von seiner Position bevorzugte Zielorte aus. Anschließend "positioniert" die Signalverarbeitungseinheit 6 virtuelle Signalquellen 9 an den Positionen der Zielorte, welche der Nutzer 8 zuvor ausgewählt hat. Somit werden die Zielorte akustisch in das Umfeld des Nutzers 8 eingebunden. D.h. der Nutzer 8 erhält Informationen darüber, wo sich die Zielorte räumlich befinden, ohne beispielsweise auf eine digitale Karte schauen zu müssen. Das Smartphone kann daher nach einer Auswahl der Zielorte in einer Tasche verstaut werden, da die "räumliche Informierung" rein akustisch mittels der binauralen Hörvorrichtung 4, beispielsweise mittels eines Kopfhörers erfolgt.

Ergänzend zu der Informierung des Nutzers 8 mittels des Hörsystems 2 ist dieses im Ausführungsbeispiel auch zu einer Navigation des Nutzers 8 beispielsweise von seiner aktuellen Position zu einem POI ausgebildet. Hierzu wählt der Nutzer 8 beispielsweise mittels der Eingabeeinheit 16 einen POI aus und durch einen Abgleich der mittels des Positionssensors 12 ermittelten aktuellen Position des Nutzers 8 und der Position des ausgewählten POI, wird ein Wegführung erstellt, vorzugsweise mittels der Eingabeeinheit 16, beispielsweise dem Smartphone des Nutzers 8. Entgegen einer an sich bekannten Beschreibung des Weges per Sprachsignale und / oder mittels visueller Signale, beispielsweise mittels Pfeilen auf einer digitalen Karte eines Smartphones, erfolgt die Wegbeschreibung im Ausführungsbeispiel mittels räumlich platziertes virtuellen Signalquellen 9a,b,c. Die virtuellen Signalquellen 9a,b,c werden derart positioniert, dass das akustische Signal S, welche die virtuelle Signalquelle 9 nachbildet, aus der Richtung "ausgesendet" wird, in die sich der Nutzer 8 bewegen soll, um den gewünschten POI zu erreichen. Beispielsweise hört der Nutzer 8 an einer Kreuzung an der er rechts in eine Zielstraße abbiegen soll eine "in" der Zielstraße positionierte virtuelle Signalquelle 9 (welche ein sprachloses akustisches Signal S aussendet) anstelle eines Sprachkommandos.

Somit ist eine Möglichkeit geschaffen, dass sich der Nutzer 8 beispielsweise während der Navigation mit einer dritten Person unterhalten kann, ohne sich gleichzeitig auf die Stimme der dritten Person und die Sprachkommandos der Navigation konzentrieren zu müssen.

Um dem Nutzer 8 bezüglich einer Entfernung zum Zielort zu informieren ist die Signalverarbeitungseinheit 6 in Zusammenarbeit mit dem Positionssensor 12 derart ausgebildet, dass sich beispielsweise die Lautstärke des akustischen Signals S verändert, sofern sich der Nutzer 8 auf den Zielort zubewegt.

In Fig. 2 sind mehrere virtuelle Signalquellen 9a,b,c dargestellt, welche räumlich um einen Nutzer 8 positioniert sind. Zur genauen Definition von im Folgenden benötigten Richtungen und / oder Ausrichtungen ist in Fig. 2 weiterhin ein Koordinatensystem 20 in an sich bekannter Weise dargestellt. Das Koordinatensystem weist eine x-Richtung und eine y-Richtung auf, welche sich jeweils orthogonal zueinander erstrecken.

Eine Ausrichtung des Nutzers 8 und somit seine Blickrichtung 22 erstreckt sich im Ausführungsbeispiel in y-Richtung.

Eine Erfassung der Ausrichtung des Kopfes des Nutzers 8 sowie eine Erfassung von Bewegungen des Kopfes 24 des Nutzers 8 ist insbesondere für die räumliche Positionierung der virtuellen Signalquellen 9a,b,c essentiell. Im Folgenden wird der Einfachheit halber der Kopf des Nutzers 8 kurz als Kopf 24 bezeichnet.

Zur Erfassung der Ausrichtung und der Bewegungen des Kopfes 24 weist das Hörsystem 2 eine Erfassungseinheit 26, beispielsweise einen Beschleunigungssensor auf. Alternativ oder ergänzend weist die Erfassungseinheit 26 einen Gyrosensor auf.

Die Erfassungseinheit 26 erfasst die Bewegungen des Kopfes 24, beispielsweise in und entgegen der x-Richtung und / oder y-Richtung, insbesondere eine Ausrichtungsänderung einer vorherigen Ausrichtung des Kopfes 24 in Bezug auf eine Ausrichtung des Kopfes 24 nach einer Bewegung. Mit anderen Worten: Ist der Kopf 24 zu Beginn einer Bewegung in y-Richtung ausgerichtet (der Nutzer blickt in y-Richtung) und dreht der Nutzer 8 den Kopf 24 derart, dass der Kopf 24 nach der Bewegung beispielsweise in x-Richtung ausgerichtet ist (der Nutzer blickt nun in x-Richtung), so erfasst die Erfassungseinheit im Ausführungsbeispiel eine Drehbewegung des Kopfes 24 um einen Winkel mit einem Wert von 90° "nach rechts" (bezogen auf die Ausrichtung der x- und y-Richtung des Koordinatensystems 20).

Analog erfasst die Erfassungseinheit 26 auch derartige Ausrichtungsänderungen bezüglich einer Kippbewegung des Kopfes 24. Unter Kippbewegung wird hierbei eine Bewegung verstanden, die erfolgt, wenn der Nutzer 8 die Blickrichtung 22 "nach oben" oder "nach unten" verlagert, sprich "in den Himmel" oder "auf den Boden" schaut. Weiterhin ist auch eine Erfassung einer Kombination einer Kippbewegung mit einer Drehbewegung des Kopfes 24 mittels der Erfassungseinheit 26 ermöglicht. Unter einer Kombination einer Kippbewegung mit einer Drehbewegung wird vorliegend beispielsweise eine Verlagerung der Blickrichtung 22 des Nutzers 8 durch eine Bewegung des Kopfes 24 von "unten links" nach "oben rechts" verstanden. Auf eine Miteinbeziehung einer Beweglichkeit der Pupille innerhalb des Kopfes 24 wird hierbei aus Gründen der Vereinfachung verzichtet.

Aufgrund dessen, dass die durch die akustischen Signale S nachgebildeten virtuellen Signalquellen 9a,b,c ortsfest sind, d.h. räumlich betrachtet - unabhängig einer Ausrichtung des Kopfes - der Position eines Zielortes entsprechen, ist die Erfassung der Bewegung und somit der Ausrichtung des Kopfes 24 für eine Orientierung des Nutzers 8 ein entscheidendes Merkmal.

Mit anderen Worten: Beispielsweise ist eine virtuelle Signalquelle 9b in x-Richtung und somit rechts vom Nutzer 8 positioniert. Der Nutzer 8 nimmt die virtuelle Signalquelle 9b aufgrund der binauralen Hörvorrichtung 4 "rechts von ihm" wahr. D.h., dass, wie eingangs bereits beschrieben, die Signalverarbeitungseinheit 6 ein akustisches Signal S erzeugt, welches dem linken Ohr 28a des Nutzer mittels der binauralen Hörvorrichtung 4 phasenverschoben und / oder zeitverzögert zugespielt wird. Das rechte Ohr 28b des Nutzers 8 hört das akustische Signal S unverändert oder lediglich leicht phasenverschoben und / oder zeitverzögert.

Dreht der Nutzer 8 seinen Kopf 24 beispielsweise in einem Winkel mit einem Wert von 90° nach links, sodass die Blickrichtung 22 anschließend entgegen der x-Richtung erfolgt, so nimmt der Nutzer 8 die virtuelle Signalquelle 9b derart wahr, als sei sie hinter ihm positioniert. D.h. die eigentliche räumliche Position der virtuellen Signalquelle 9b hat sich nicht geändert, allerdings wurde ihre Position in einem Bezugssystem des Nutzers 8 um einen Winkel mit einem Wert von 90° entgegen der Drehrichtung des Kopfes 24 "verschoben". Somit erfolgt ein Angleichen der Positionen der räumlich positionierten virtuellen Signalquellen 9a,b,c bezüglich des Bezugssystems des Kopfes 24, sodass dem Nutzer 8 hierdurch eine räumlich konstante Position der virtuellen Signalquellen 9a,b,c vermittelt wird.

Diese Ausgestaltung ermöglicht eine Orientierung des Nutzers 8 anhand der virtuellen Signalquellen 9a,b,c.

Alternativ oder ergänzend erfolgt die Erfassung der Ausrichtung und / oder der Bewegung des Nutzers 8 und / oder des Kopfes 24 beispielsweise mittels der innerhalb des Smartphones des Nutzers 8 integrierten Positionsbestimmungs- und / oder Neigungssensoren.

### Bezugszeichenliste

- 2: Hörsystem
- 4: binaurale Hörvorrichtung
- 6: Signalverarbeitungseinheit
- 8: Nutzer
- 9a,b,c: virtuelle Signalquelle
- 10a,b: Lautsprecher
- 12: Positionssensor
- 16: Modul
- 18: Datenbank
- 20: Koordinatensystem
- 22: Blickrichtung
- 24: Kopf des Nutzers
- 26: Erfassungseinheit
- 28a: linkes Ohr des Nutzers
- 28b: rechtes Ohr des Nutzers
- S: akustisches Signal

## Patentansprüche

1. Hörsystem (2) mit
- einer binauralen Hörvorrichtung (4) mit einer Signalverarbeitungseinheit (6) zur Erzeugung eines akustischen Ausgangssignals (S), das derart beschaffen ist, dass es für einen Nutzer (8) eine räumlich positionierte virtuelle Signalquelle (9) nachbildet, **gekennzeichnet durch**
- einen Positionssensor (12) zur Bestimmung einer aktuellen Position des Nutzers (8),
- ein Modul (16) zur Identifizierung einer Position eines Ortes in der Umgebung des Nutzers (8) sowie
- eine Ausbildung der Signalverarbeitungseinheit (6) derart, dass eine räumliche Position der virtuellen Signalquelle (9) der Position des Zielorts entspricht.

2. Hörsystem (2) nach dem vorhergehenden Anspruch,
**dadurch gekennzeichnet,**
**dass** es sich bei dem Modul (16) um eine Eingabeeinheit zur Vorgabe einer Position des Ortes handelt und das Modul (16) insbesondere zur Identifizierung der Position des Ortes mit Hilfe einer Umgebungskarte ausgebildet ist.

3. Hörsystem (2) nach einem der vorhergehenden Ansprüche,
**dadurch gekennzeichnet,**
**dass** es zumindest ein Mikrofon zur Aufnahme von Umgebungsgeräuschen aufweist und das Modul (16) zur Identifizierung der Position des Ortes mit Hilfe der aufgenommenen Umgebungsgeräusche ausgebildet ist.

4. Hörsystem (2) nach einem der vorhergehenden Ansprüche,
**dadurch gekennzeichnet,**
**dass** die Signalverarbeitungseinheit (6) zur Ausgabe von unterschiedlichen akustischen Ausgangssignalen (S) ausgebildet ist, wobei die Ausgangssignale (S) in Abhängigkeit von Eigenschaften des Ortes verschieden sind.

5. Hörsystem (2) nach einem der vorhergehenden Ansprüche,
**dadurch gekennzeichnet,**
**dass** die Signalverarbeitungseinheit (6) zur insbesondere zeitabhängigen Auswahl der Orte ausgebildet ist, zu denen akustische Ausgangssignale (S) ausgegeben werden.

6. Hörsystem (2) nach einem der vorhergehenden Ansprüche,
**dadurch gekennzeichnet,**
**dass** die Signalverarbeitungseinheit (6) derart ausgebildet ist, dass die virtuelle Signalquelle (9) durch ein sprachloses Ausgangssignal (S), insbesondere einen Signalton nachgebildet ist.

7. Hörsystem (2) nach einem der vorhergehenden Ansprüche,
**dadurch gekennzeichnet,**
**dass** die Signalverarbeitungseinheit (6) derart ausgebildet ist, dass die Position der virtuellen Signalquelle (9) ortsfest und unabhängig von der aktuellen Position des Nutzers (8) ist und insbesondere zur Navigation des Nutzers (8) zum Zielort ausgebildet ist.

8. Hörsystem (2) nach einem der vorhergehenden Ansprüche,
**dadurch gekennzeichnet,**
**dass** die Signalverarbeitungseinheit (6) derart ausgebildet ist, dass ein Parameter des akustischen Ausgangssignals (S) abhängig von der aktuellen Position des Nutzers (8) in Relation zum Zielort variiert.

9. Hörsystem (2) nach einem der vorhergehenden Ansprüche,
**dadurch gekennzeichnet,**
**dass** das über die Eingabeeinheit (16) eine Auswahl des Zielortes durch den Nutzer (8) ermöglicht ist.

10. Hörsystem (2) nach einem der vorhergehenden Ansprüche,
**gekennzeichnet durch**
eine Erfassungseinheit (26), welche zur Erfassung der Orientierung des Kopfes (24), insbesondere einer Bewegung des Kopfes des Nutzers (8) ausgebildet ist und dass die Signalverarbeitungseinheit (6) derart ausgebildet ist, dass die Position der virtuellen Signalquelle (9) in Bezug auf die Orientierung des Kopfes (24) derart angeglichen wird, sodass für den Nutzer (8) der Zielort ortsfest ist.

11. Hörsystem (2) nach einem der vorhergehenden Ansprüche,
**dadurch gekennzeichnet,**
**dass** eine Verbindung mit einer Datenbank (18) herstellbar ist, welche Informationen über die Positionen von Zielorten aufweist und die Datenbank (18) insbesondere vom Nutzer (8) verwaltbar ist.

12. Hörsystem (2) nach einem der vorhergehenden Ansprüche,
**dadurch gekennzeichnet,**
**dass** die Signalverarbeitungseinheit (6) derart ausgebildet ist, dass sie die akustischen Ausgangssignale (S) mit Umgebungssignalen überlagert.

13. Hörsystem (2) nach einem der vorhergehenden Ansprüche,
**dadurch gekennzeichnet,**
**dass** die binaurale Hörvorrichtung (4) als ein Hörhilfegerät ausgebildet ist.

14. Hörsystem (2) nach Anspruch 2,
**dadurch gekennzeichnet,**
**dass** mittels der Eingabeeinheit vom Nutzer (8) zumindest ein Ambientesignal auswählbar ist, welches mit dem akustischen Ausgangssignal (S) überlagert wird.

15. Hörvorrichtung mit einer Signalverarbeitungseinheit (6) zur Erzeugung eines akustischen Ausgangssignals (S), das derart beschaffen ist, dass es für einen Nutzer (8) eine räumlich positionierte virtuelle Signalquelle (9) nachbildet,
**gekennzeichnet durch**
eine Ausbildung der Signalverarbeitungseinheit (6) derart, dass eine räumliche Position der virtuellen Signalquelle (9) der Position eines vorgebbaren Zielorts entspricht.
